(19) **Europäisches Patentamt / European Patent Office / Office européen des brevets**

(11) **EP 4 475 548 A1**

(12) **EUROPEAN PATENT APPLICATION**
published in accordance with Art. 153(4) EPC

(43) Date of publication:
**11.12.2024 Bulletin 2024/50**

(21) Application number: **22925028.7**

(22) Date of filing: **23.12.2022**

(51) International Patent Classification (IPC):
*H04N 23/60* (2023.01)    *G06F 3/01* (2006.01)
*G06T 7/70* (2017.01)    *G09G 5/00* (2006.01)

(52) Cooperative Patent Classification (CPC):
**G06F 3/01; G06T 7/70; G09G 5/00; H04N 23/60**

(86) International application number:
**PCT/JP2022/047632**

(87) International publication number:
**WO 2023/149125 (10.08.2023 Gazette 2023/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.02.2022 JP 2022016495**

(71) Applicant: **Sony Interactive Entertainment Inc.
Tokyo 108-0075 (JP)**

(72) Inventors:
• **TSURU Daisuke**
**Tokyo 108-0075 (JP)**
• **UCHIDA Masaki**
**Tokyo 108-0075 (JP)**
• **HAYAKAWA Yuto**
**Tokyo 108-0075 (JP)**
• **NISHIBE Mitsuru**
**Tokyo 108-0075 (JP)**

(74) Representative: **D Young & Co LLP
3 Noble Street
London EC2V 7BQ (GB)**

(54) **INFORMATION PROCESSING DEVICE AND INFORMATION PROCESSING METHOD**

(57)    An image forming device tracks a state of a head mounted display by Visual SLAM on the basis of a captured image of a space around a user wearing the head mounted display. The image forming device determines keyframes collated with a current frame during (a) setting of a play area (step S50), and classifies some of the determined keyframes into keyframes prohibiting discard (step S52). The image forming device reads stored keyframe data and uses the read keyframe data for tracking during (b) execution of an application (step S60). The image forming device adds keyframes and discards pieces of data of keyframes allowing discard according to movement of the user (step S64).

FIG.14

EP 4 475 548 A1

# Description

[Technical Field]

The present invention relates to an information processing device and an information processing method for specifying a state of a target on the basis of a captured image.

[Background Art]

An image display system which enables a user wearing a head mounted display to enjoy a target space from a free viewpoint is in widespread use. For example, such electronic content is known which designates a virtual three-dimensional space as a display target, and causes a head mounted display to display an image corresponding to a visual line direction of a user to realize virtual reality (VR). Moreover, such a walkthrough system has been developed which enables a user wearing a head mounted display to virtually walk around in a space displayed as a video image as a result of physical movement of the user.

A technology which tracks a position and a posture of an object allowed to freely move, and performs information processing in response to this tracking has been demanded not only in the field of head mounted displays, but also other various fields such as autonomous moving robots and automobiles (e.g., see PTL 1).

[Citation List]

[Patent Literature]

[PTL 1]
JP 2019-149621 A

[Summary]

[Technical Problems]

For enabling a user wearing a head mounted display and not visually recognizing a situation in a real space to enjoy content without a danger of a collision with surrounding objects, it is desirable to specify a positional relation between the surrounding objects and the user with high accuracy, and present an appropriate warning and a movement limitation. As described above, such avoidance of a danger and guidance for a correct movement direction have been demanded in various fields. In the case of the head mounted display, it is further necessary to continuously and accurately recognize the position and the posture of the head of the user so as to also enhance a sense of immersion and a sense of realism for a display world in a VR technology or the like which changes a visual field according to movement of the user.

The present invention has been made in consideration of the aforementioned problems. An object of the present invention is to provide a technology capable of continuously and accurately tracking a position and a posture of a target on the basis of a captured image.

[Solution to Problems]

In order to solve the above problems, an aspect of the present invention is directed to an information processing device. This information processing device includes a state information acquisition unit that extracts a feature point from each of latest frames of a moving image currently captured, and acquires state information regarding a position and a posture of a device equipped with a camera capturing the moving image, on the basis of a relation between a corresponding feature point of a previous frame to be collated and a point on a subject represented by these feature points, a registration information generation unit that determines frames included in the latest frames and meeting a predetermined condition as keyframes used as a reference for the previous frame, classifies each of the keyframes into any one of a plurality of groups for which different discard rules are set, registers the classified keyframes, and then discards, on the basis of the discard rules, any of pieces of data of keyframes previously registered, and a registration information storage unit that stores data of each of the keyframes together with information indicating the classification.

Another aspect of the present invention is directed to an information processing method. This information processing method includes a step of extracting a feature point from each of latest frames of a moving image currently captured, and acquiring state information regarding a position and a posture of a device equipped with a camera capturing the moving image, on the basis of a relation between a corresponding feature point of a previous frame to be collated and a point on a subject represented by these respective feature points, a step of determining frames included in the latest frames and meeting a predetermined condition as keyframes used as a reference for the previous frame, classifying each of the keyframes into any one of a plurality of groups for which different discard rules are set, and registering the classified keyframes, a step of discarding, on the basis of the discard rules, any of pieces of data of keyframes previously registered, and a step of storing data of each of the keyframes in a storage device together with information indicating the classification.

It is noted that any combinations of the components described above and the expressions of the present invention that are converted between a system, a computer program, a recording medium on which the computer program is readably recorded, a data structure, and the like are also effective as aspects of the present invention.

[Advantageous Effects of Invention]

The present invention achieves continuous and accurate tracking of a position and a posture of a target on the basis of a captured image.

[Brief Description of Drawings]

[FIG. 1]

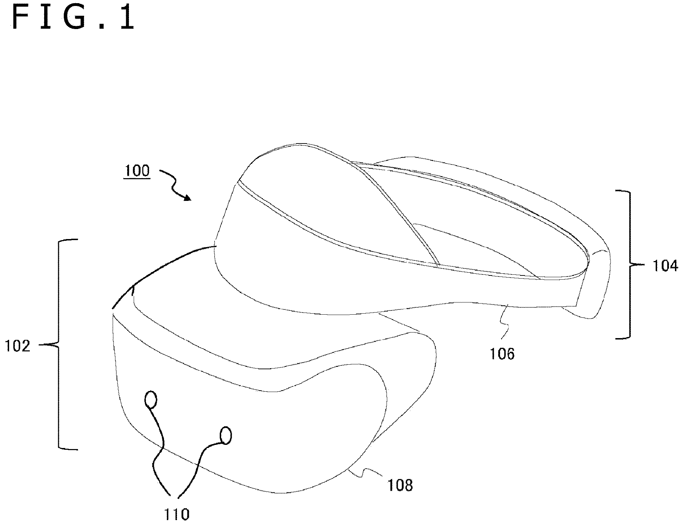

FIG. 1 is a diagram depicting an external appearance example of a head mounted display according to the present embodiment.
[FIG. 2]

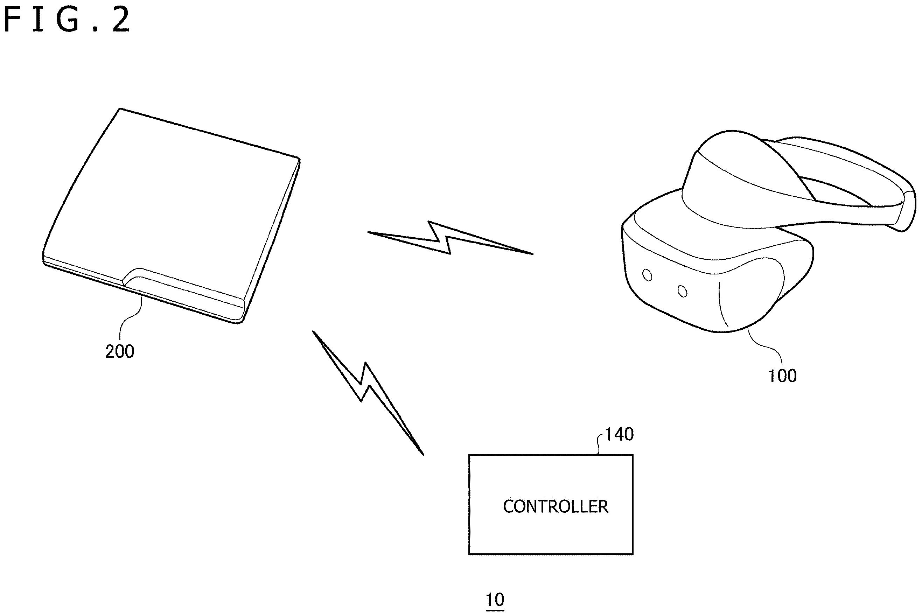

FIG. 2 is a diagram depicting a configuration example of an image display system according to the present embodiment.
[FIG. 3]

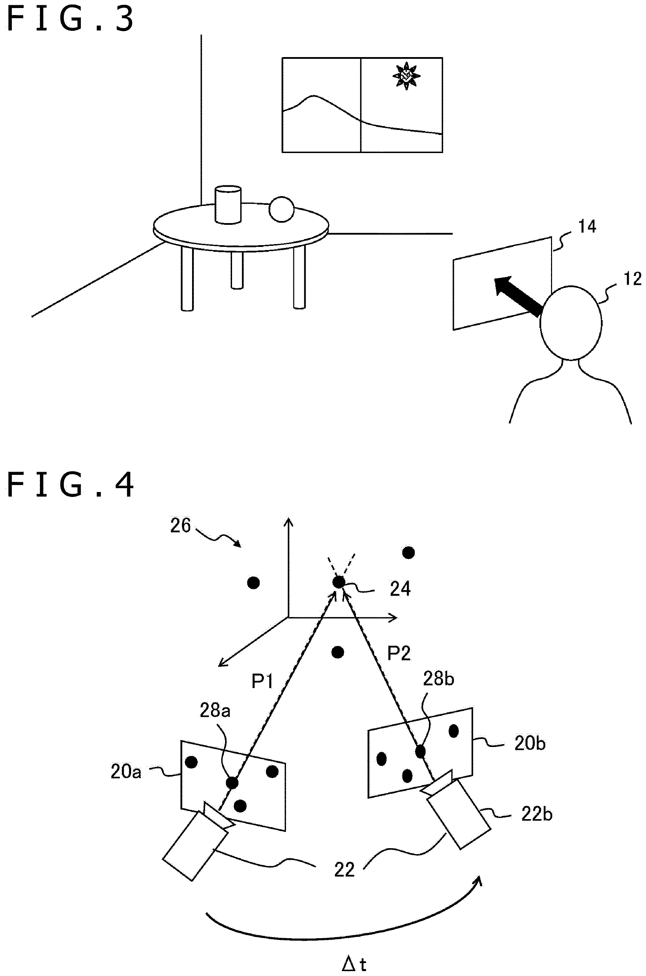

FIG. 3 is a diagram for explaining an example of an image world that an image forming device causes the head mounted display to display according to the present embodiment.
[FIG. 4]
FIG. 4 is a diagram for explaining an outline of a principle of Visual Simultaneous Localization and Mapping (SLAM).
[FIG. 5]

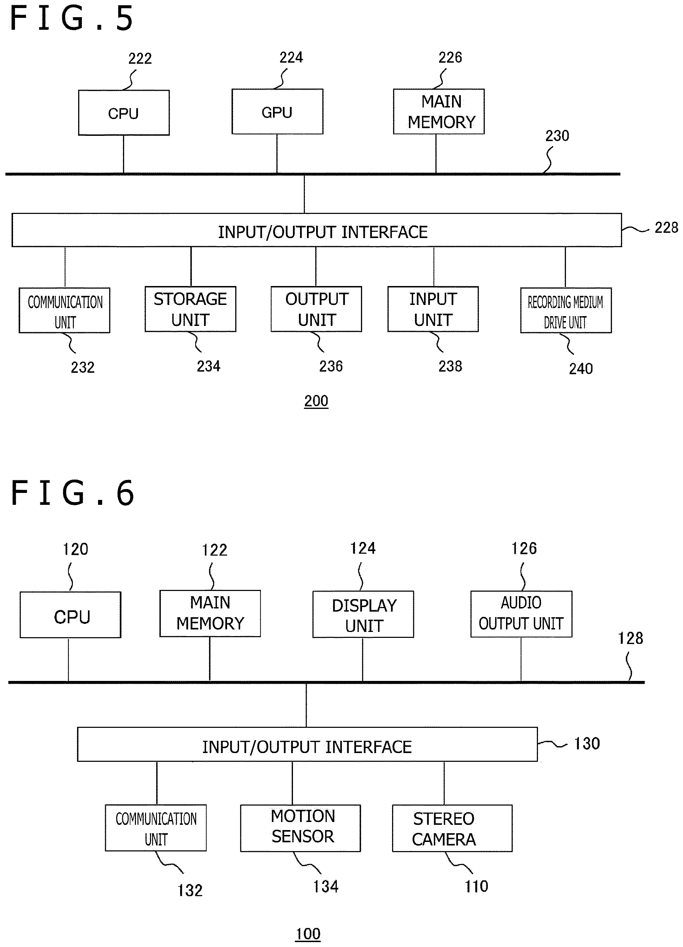

FIG. 5 is a diagram depicting an internal circuit configuration of the image forming device according to the present embodiment.
[FIG. 6]
FIG. 6 is a diagram depicting an internal circuit configuration of the head mounted display according to the present embodiment.
[FIG. 7]

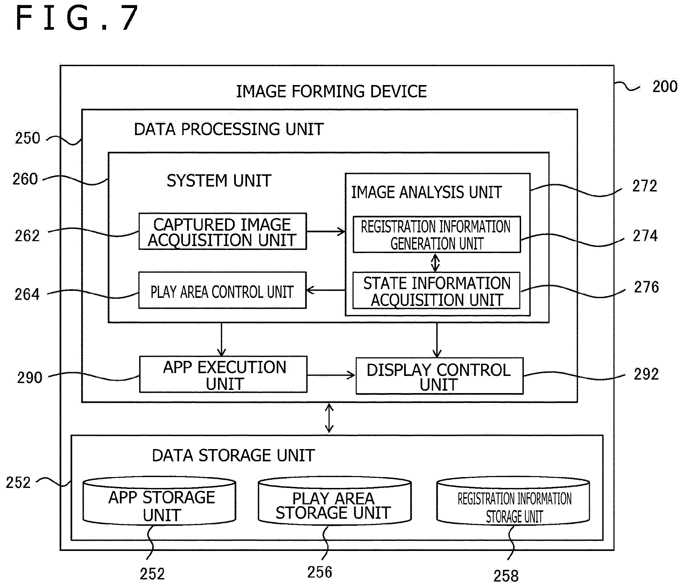

FIG. 7 is a block diagram depicting functional blocks of the image forming device according to the present embodiment.
[FIG. 8]

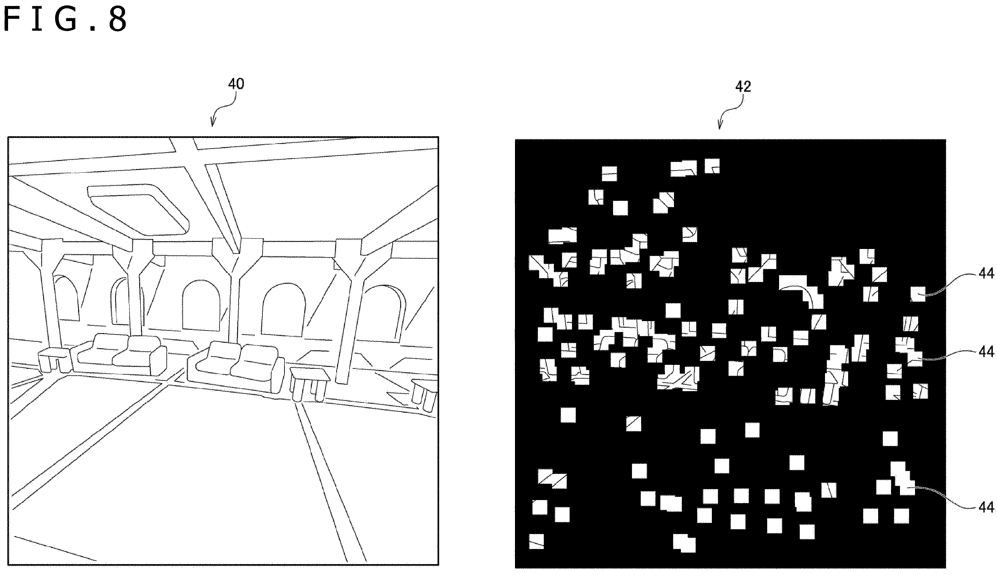

FIG. 8 is a diagram depicting an image of a frame captured by a stereo camera, and a data example of a keyframe obtained from this image according to the present embodiment.
[FIG. 9]

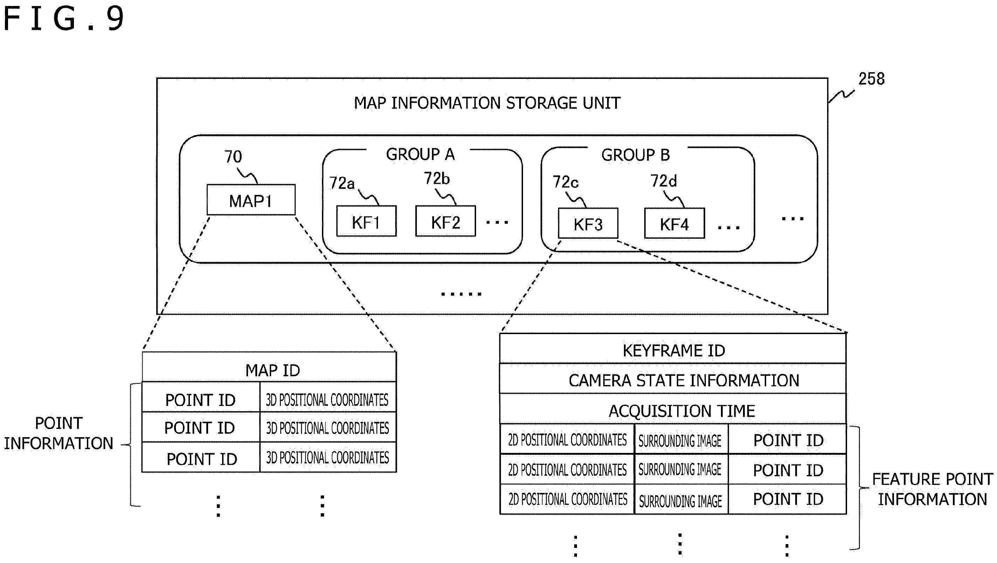

FIG. 9 is a diagram depicting an example of a data structure of registration information stored in a registration information storage unit according to the present embodiment.
[FIG. 10]

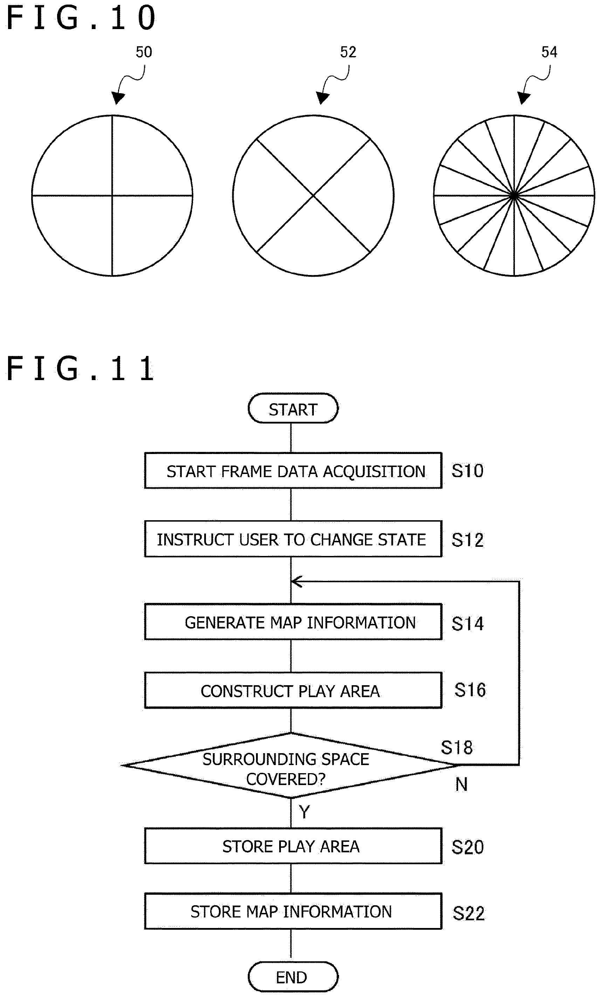

FIG. 10 is a diagram depicting examples of space division for evaluating space covering by keyframes according to the present embodiment.
[FIG. 11]
FIG. 11 is a flowchart illustrating processing procedures performed by the image forming device to set a play area according to the present embodiment.
[FIG. 12]

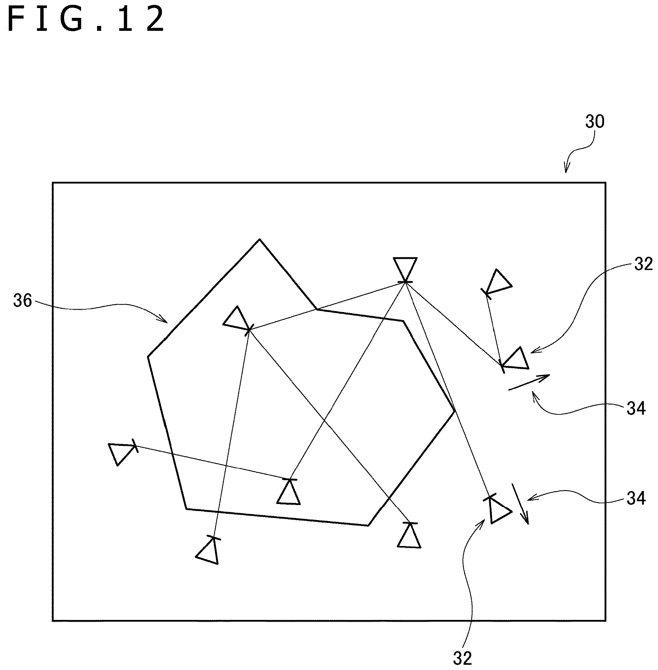

FIG. 12 is a bird's eye view illustrating an example of a state change of the head mounted display in a period of processing from steps S14 to S18 in FIG. 11.
[FIG. 13]

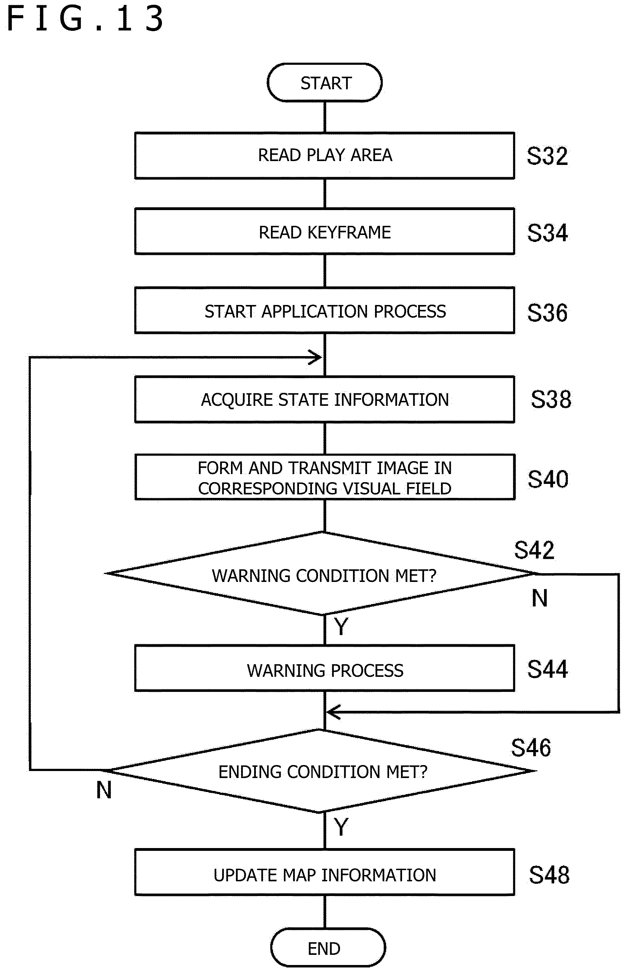

FIG. 13 is a flowchart illustrating processing procedures performed by the image forming device to execute an application according to the present embodiment.
[FIG. 14]

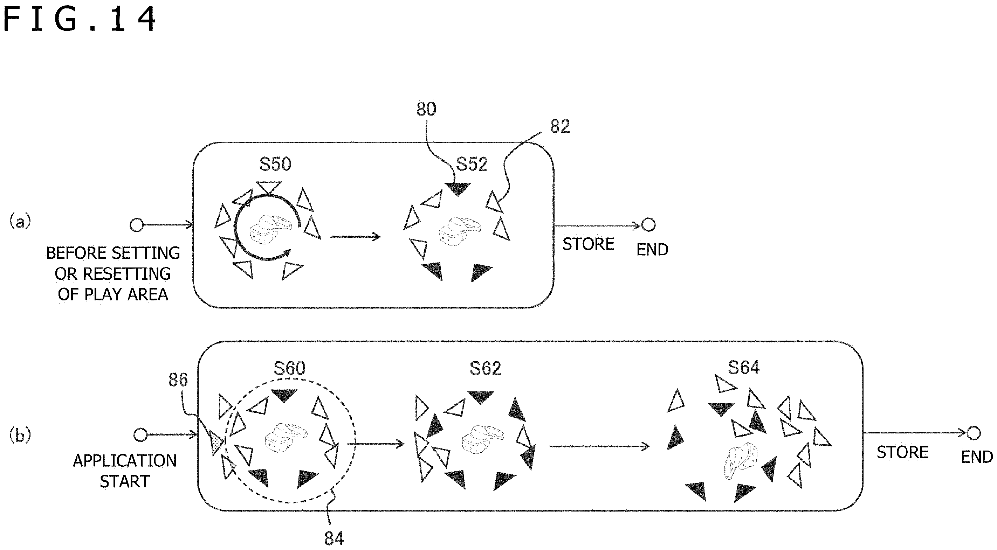

FIG. 14 depicts diagrams each depicting an example of transitions of keyframes according to the present embodiment.

[Description of Embodiments]

The present embodiment pertains to a technology which specifies a position and a posture of a moving body equipped with a camera by analyzing an image captured by this camera. The moving body in this definition is not limited to a specific type. A head mounted display will hereinafter be described as a typical example of the moving body. Note that at least either a position or a posture of the head mounted display will collectively be referred to as a "state" of the head mounted display in some cases in the following description.
FIG. 1 is an external appearance example of a head mounted display 100. The head mounted display 100 in this example includes an output mechanism unit 102 and an attachment mechanism unit 104. The attachment mechanism unit 104 includes an attachment band 106 attached to a user to cover a full circle of the head of the user and fix the device.
The output mechanism unit 102 includes a housing 108 shaped to cover the left and right eyes of the user in a state where the head mounted display 100 is attached to the user. A display panel is provided inside the output mechanism unit 102 in such a position as to face the eyes during attachment. It is assumed in this example that the display panel of the head mounted display 100 is not transparent. Specifically, the head mounted display 100 is a head mounted display of a type not transmissive to light.
An ocular lens may be further provided inside the housing 108 at a position between the display panel and the eyes of the user during attachment of the head mounted display 100 to expand a viewing angle of the user. The head mounted display 100 may further include a speaker or an earphone at each of positions corresponding to the ears of the user during attachment. Moreover, the head mounted display 100 includes a built-in motion sensor to detect translational motion and rotational motion of the head of the user wearing the head mounted display 100, and also detect a position and a posture of the head of the user at each point of time.
Further, the head mounted display 100 includes a stereo camera 110 on a front surface of the housing 108. The stereo camera 110 captures video images of a surrounding real space in a visual field corresponding to a visual line of the user. What is generally called video see-through, which presents to the user a view of a state of a real space as it is in a facing direction of the user, is achievable by displaying a captured image in real time. Moreover, augmented reality (AR) is achievable by drawing an image of a virtual object on an image of a real object contained in a captured image.

FIG. 2 depicts a configuration example of an image display system according to the present embodiment. An image display system 10 includes the head mounted display 100, an image forming device 200, and a controller 140. The head mounted display 100 is connected to the image forming device 200 by wireless communication. The image forming device 200 may be further connected to a server via a network. In this case, the server may provide data on an on-line application to the image forming device 200, such as data on a game in which a plurality of users are allowed to participate via the network.

The image forming device 200 is an information processing device which specifies a position of a viewpoint or a direction of a visual line of the user wearing the head mounted display 100 on the basis of a position and a posture of the head mounted display 100, forms a display image in a visual field corresponding to the specified position or direction, and outputs the formed display image to the head mounted display 100. For example, the image forming device 200 may form an image of a virtual world corresponding to a stage of an electronic game as a display image while advancing the game, or may display a moving image for the purpose of appreciation or information provision, regardless of whether for a virtual world or a real world. Moreover, the image forming device 200 is capable of giving the user a deep sense of immersion into a display world by displaying a panorama image, which has a wide angle of view around a viewpoint of the user, on the head mounted display 100. Note that the image forming device 200 may be either a stationary type game machine, or a PC.

The controller 140 is a controller (e.g., game controller) held by the hand of the user and receiving an operation input from the user to control image formation by the image forming device 200 and image display by the head mounted display 100. The controller 140 is connected to the image forming device 200 by wireless communication. In a modification, either one or both of the head mounted display 100 and the controller 140 may be connected to the image forming device 200 by wired communication via a signal cable or the like.

FIG. 3 is a diagram for explaining an example of an image world that the image forming device 200 causes the head mounted display 100 to display. Produced in this example is such a state where a user 12 is present in a room that is a virtual space. As depicted in the figure, objects such as a wall, a floor, a window, a table, and things on the table are disposed in a world coordinate system defining the virtual space. The image forming device 200 defines a view screen 14 in this world coordinate system according to a position of a viewpoint or a direction of a visual line of the user 12, and represents images of the objects to draw a display image.

The image forming device 200 acquires a state of the head mounted display 100 at a predetermined rate, and changes a position and a posture of the view screen 14 according to the acquired state. In this manner, an image can be displayed on the head mounted display 100 in a visual field corresponding to the visual line of the user. Moreover, the image forming device 200 is also capable of presenting a stereoscopic view of the virtual space to the user 12 by forming stereo images each having disparity, and displaying the stereo images in left and right regions of the display panel of the head mounted display 100. This enables the user 12 to experience virtual reality as if the user 12 were in the room that is in the display world.

The image forming device 200 according to the present embodiment sequentially acquires the state of the head mounted display 100, and also the position or the posture of the head of the user wearing the head mounted display 100 on the basis of at least an image captured by the stereo camera 110. Information thus acquired is available for setting the view screen 14, and for setting a play area defining a range of a real world where the user is movable. The play area refers to a range of the real world where the user viewing the virtual world via the head mounted display 100 is allowed to move around, such as a range where safe movement is guaranteed without a collision with a surrounding object.

Visual SLAM is known as a technology which simultaneously achieves estimation of a self-position of a moving body equipped with a camera, and creation of an environmental map, both on the basis of a captured image. FIG. 4 is a diagram for explaining an outline of a principle of Visual SLAM. A camera 22 is provided on a moving body to capture video images of a real space 26 in a visual field range while changing a position and a posture. Suppose herein that feature points 28a and 28b each representing a point 24 on an identical subject are extracted from a frame 20a captured at a certain point of time, and a frame 20b captured after a time period $\Delta t$, respectively.

A difference in positional coordinates between the feature points 28a and 28b corresponding to each other (hereinafter referred to as "corresponding points" in some cases) in respective frame planes is dependent on a change of the position and the posture of the camera 22 in the time period $\Delta t$. Specifically, assuming that matrixes expressing changes produced by rotational motion and translational motion of the camera 22 are R and T, respectively, and that three-dimensional vectors from the positions of the camera 22 at the respective points of time to the point 24 are P1 and P2, a following relational expression holds.

$$P1 = R \cdot P2 + T$$

When the above relation is used to extract a plurality of corresponding points of two frames captured at different time points and solve a simultaneous equation, it is possible to specify the change in the position and the posture of the camera 22 that has occurred between the different time points. Moreover, three-dimensional information regarding the subject surface in the real space 26, such as the point 24, can be accurately constructed by a process for minimizing an error of a derivation result with use of recursive calculation. In addition, when the stereo camera 110 is used as the camera 22, three-dimensional positional coordinates of the point 24 and the like are independently obtained for each point of time. Accordingly, computations such as extraction of the corresponding points can be more easily performed.

However, algorithms of Visual SLAM are established even in a case where the camera 22 is constituted by a monocular camera. Accordingly, for the purpose of tracking the state of the head mounted display 100, the camera included in the head mounted display 100 is not limited to the stereo camera 110. Moreover, a large number of algorithms have been proposed for Visual SLAM, and any of these algorithms is applicable. In any case, according to the principle depicted in the figure, a state change of the camera 22 from a previous time can be derived at a rate identical to a frame rate of a moving image. However, this information is only relative information.

Accordingly, errors are accumulated according to a repeat of the same process and addition of a derived state change to a state obtained at a previous time. In this case, a deterioration of tracking accuracy with an elapse of time, and a final breakdown of tracking may be caused. For overcoming this problem, feature points of previous frames, for which a state of the camera 22 has been already specified, are stored in association with this state of the camera 22. Thereafter, the stored feature points are collated with feature points of a current frame (latest frame) to cancel accumulation of errors at a predetermined timing. Specifically, previous state information is designated as a reference, and a timing for acquiring a state of the camera 22 as a change from this previous state information is regularly set to cancel errors produced in a period up to each timing.

In this manner, an increase in errors can be reduced even when the tracking period is prolonged. The frame designated as a reference for the state change as described above will be referred to as a "keyframe." In a case where a state of the camera 22 is acquired using a keyframe as a frame to be collated, a frame formed at the time of acquisition (current frame) can also function as a keyframe. For obtaining a necessary number of corresponding points in a keyframe by a collation with a current frame, it is desirable to reliably obtain a keyframe formed in a state closest possible to the state of the camera 22 capturing the current frame.

In other words, for continuing accurate tracking of the state of the camera 22, a larger number of keyframes need to be reliably obtained as the movement range allowed for the moving body equipped with the camera 22 becomes wider. Meanwhile, if keyframes are frequently stored according to movement of the moving body during operation or other occasions, a storage area will run out in the future. Accordingly, one possible solution to this problem is to discard data indicating older keyframes. In this case, however, the state of the camera 22 for which keyframes have been obtained may become unbalanced. For example, if not a considerably changeable state in the position and direction of the camera 22 continues long, only keyframes indicating this position and direction may be left.

In a case where the camera 22 suddenly changes its direction or moves in a direction different from a previous tendency in this condition, a collation may fail due to absence of keyframes having sufficient corresponding points. Another possible solution is to acquire various keyframes beforehand as initial processing so as to completely cover the movement range, and track the state of the camera 22 without changing the keyframes in following processing. However, particularly in the case of the head mounted display 100, the user needs to move until acquisition of sufficient keyframes meeting conditions is finished. This process is a considerably laborious task.

According to the present embodiment, keyframes are basically acquired together with acquisition of state information at the time of setting of a play area or execution of an application. Thereafter, the acquired keyframes are classified into a plurality of groups for which different discard rules are set. In a simplest case, the keyframes are classified into keyframes prohibiting discard and keyframes allowing discard. For example, as the former type of keyframes, one keyframe is selected for each of a plurality of states covering all possible directions in which the camera 22 may face.

In this manner, a keyframe close to the state of the camera 22 can be selected as a keyframe to be collated for any change of the direction of the camera 22. If at least such keyframes are reliably obtained, the state of the camera 22 can be accurately acquired even in a case in which other keyframes remained are mostly keyframes obtained in a state close to the current situation. In other words, the other keyframes are allowed to be discarded from the oldest. Note that the classifications determined once may be fixed without change, or may be updated according to situations. Specific examples will be described below.

FIG. 5 depicts an internal circuit configuration of the image forming device 200. The image forming device 200 includes a central processing unit (CPU) 222, a graphics processing unit (GPU) 224, and a main memory 226. These components are connected to each other via a bus 230. An input/output interface 228 is further connected to the bus 230. A communication unit 232, a storage unit 234, an output unit 236, an input unit 238, and a recording medium drive unit 240 are connected to the input/output interface 228.

The communication unit 232 includes a peripheral device interface such as USB and IEEE 1394, and a network interface such as a wired LAN and a wireless LAN. The storage unit 234 includes a hard disk drive, a non-volatile memory, and others. The output unit 236 outputs data to the head mounted display 100. The input unit 238 receives data input from the head mounted display 100, and receives data input from the controller 140. The recording medium drive unit 240 drives a removable recording medium such as a magnetic disk, an optical disk, and a semiconductor memory.

The CPU 222 executes an operating system stored in the storage unit 234 to control the entire image forming device 200. Moreover, the CPU 222 executes various programs (e.g., VR game application, etc.) read from the storage unit 234 or the removable recording medium and loaded to the main memory 226, or downloaded via the communication unit 232. The GPU 224 having a function of a geometry engine and a function of a rendering processor performs an image drawing process according to an image drawing command issued from the CPU 222, and outputs image drawing results to the output unit 236. The main memory 226 includes a random access memory (RAM), and stores programs and data necessary for processing.

FIG. 6 depicts an internal circuit configuration of the head mounted display 100. The head mounted display 100 includes a CPU 120, a main memory 122, a display unit 124, and an audio output unit 126. These components are connected to each other via a bus 128. An input/output interface 130 is further connected to the bus 128. A communication unit 132 including an interface for wireless communication, a motion sensor 134, and the stereo camera 110 are connected to the input/output interface 130.

The CPU 120 processes information acquired from the respective components of the head mounted display 100 via the bus 128, and supplies display images and audio data acquired from the image forming device 200 to the display unit 124 and the audio output unit 126. The main memory 122 stores programs and data necessary for processing performed by the CPU 120.

The display unit 124 includes a display panel such as a liquid crystal panel and an organic EL panel, and displays images before the eyes of the user wearing the head mounted display 100. The display unit 124 may display a pair of stereo images in regions corresponding to the left and right eyes to provide a stereoscopic view. The display unit 124 may further include a pair of lenses located between the display panel and the eyes of the user during attachment of the head mounted display 100 to expand a viewing angle of the user.

The audio output unit 126 includes a speaker or an earphone provided at each of positions corresponding to the ears of the user during attachment of the head mounted display 100 to enable the user to hear sounds. The communication unit 132 is an interface for transmitting and receiving data to and from the image forming device 200, and establishes communication by using a known wireless communication technology such as Bluetooth (registered trademark). The motion sensor 134 includes a gyro sensor and an acceleration sensor, and acquires angular velocity and acceleration of the head mounted display 100.

As depicted in FIG. 1, the stereo camera 110 is constituted by a pair of video cameras configured to capture images of a surrounding real space from left and right viewpoints in a visual field corresponding to a viewpoint of the user. Objects present in a visual line direction of the user (typically in front of the user) are contained in a frame of a moving image captured by the stereo camera 110. Measurement values obtained by the motion sensor 134, and data of images captured by the stereo camera 110 are transmitted to the image forming device 200 via the communication unit 132, as necessary.

FIG. 7 is a block diagram depicting functional blocks of the image forming device. As described above, the image forming device 200 executes ordinary information processing, such as advancement of electronic games and communication with servers. FIG. 7 chiefly illustrates functions for acquiring state information regarding the head mounted display 100, and functions achieved by utilizing the state information. Note that at least some of the functions of the image forming device 200 as depicted in FIG. 7 may be incorporated in a server connected to the image forming device 200 via a network. Moreover, the functions included in the image forming device 200 to acquire the state information regarding the head mounted display 100 from captured images may be separately achieved as an information processing device, or incorporated in the head mounted display 100 itself.

Furthermore, a plurality of the function blocks depicted in FIG. 7 can be implemented by configurations such as the CPU 222, the GPU 224, the main memory 226, and the storage unit 234 depicted in FIG. 5 in terms of hardware, and can be implemented by a computer program incorporating the plurality of functional blocks in terms of software. Accordingly, it is understood by those skilled in the art that these functional blocks may be variously implemented by hardware only, by software only, or by a combination of hardware and software. The method for implementing the functional blocks is not particularly limited to any one of them.

The image forming device 200 includes a data processing unit 250 and a data storage unit 252. The data processing unit 250 executes various types of data processing. The data processing unit 250 transmits and receives data to and from the head mounted display 100 and the controller 140 via the communication unit 232, the output unit 236, and the input unit 238 depicted in FIG. 5. The data storage unit 252 implemented by the storage unit 234 depicted in FIG. 5 stores data referred to or updated by the data processing unit 250. In other words, the data storage unit 252 functions as a nonvolatile storage device.

The data storage unit 252 includes an App storage unit 254, a play area storage unit 256, and a registration information storage unit 258. The App storage unit 254 stores programs, object model data, and the like necessary for executing applications involving image display, such as VR games. The play area storage unit 256 stores data regarding a play area. The data regarding the play area includes data indicating positions of point clouds constituting a boundary of the play area (e.g., coordinate values of respective points in a world coordinate system).

The registration information storage unit 258 stores registration data for acquiring a position and a posture of the head mounted display 100, and a position and a posture of the head of the user wearing the head mounted display 100. Specifically, the registration information storage unit 258 stores pieces of data of keyframes described above, and data of an environmental map representing a structure of an object surface in a three-dimensional real space (hereinafter referred to as a "map") in association with each other.

For example, the map data is information indicating three-dimensional positional coordinates of a point group on an object surface constituting a room where the user plays a VR game. The respective points are associated with feature points extracted from the keyframes. Data of each keyframe is associated with a state of the stereo camera 110 at the time of acquiring this data.

The data processing unit 250 includes a system unit 260, an App execution unit 290, and a display control unit 292. Functions of a plurality of the functional blocks herein may be incorporated in a computer program. The CPU 222 and the GPU 224 of the image forming device 200 may exert the functions of the plurality of functional blocks by reading the foregoing computer program from the storage unit 234 or a recording medium into the main memory 226, and executing the read computer program.

The system unit 260 executes system processing associated with the head mounted display 100. The system unit 260 provides common services for a plurality of applications (e.g., VR games) for the head mounted display 100. The system unit 260 includes a captured image acquisition unit 262, an image analysis unit 272, and a play area control unit 264.

The captured image acquisition unit 262 sequentially acquires frame data indicating an image captured by the stereo camera 110 and transmitted from the head mounted display 100. These pieces of data may be acquired by the captured image acquisition unit 262 at a frequency equivalent to a frame rate of the stereo camera 110, or lower than this frame rate.

The image analysis unit 272 sequentially acquires state information regarding the head mounted display 100 by a method of Visual SLAM described above. The state information regarding the head mounted display 100 is used for play area setting or resetting prior to execution of an application such as a VR game. The state information is also used for view screen setting during execution of an application, warning for an approach of the user to a play area boundary, and the like. Accordingly, the image analysis unit 272 supplies the acquired state information to the play area control unit 264, the App execution unit 290, and the display control unit 292, as necessary, according to a current situation.

Specifically, the image analysis unit 272 includes a registration information generation unit 274 and a state information acquisition unit 276. The registration information generation unit 274 generates registration information including keyframe data and map data on the basis of data indicating frames of captured images acquired by the captured image acquisition unit 262. The registration information generation unit 274 finally stores the generated registration information in the registration information storage unit 258 so as to read the stored registration information at a desired later timing.

The state information acquisition unit 276 acquires a state of the head mounted display 100, i.e., information regarding a position and a posture, for each point of time, on the basis of data indicating respective frames of captured images acquired by the captured image acquisition unit 262, and registration information. The registration information may be either information currently generated by the registration information generation unit 274, or information read by the registration information generation unit 274 from the registration information storage unit 258. The state information acquisition unit 276 may set state information by integrating the relevant information with measurement values obtained by the motion sensor 134 built in the head mounted display 100.

The registration information generation unit 274 may extract a frame meeting a predetermined criterion from frames used by the state information acquisition unit 276 for acquiring a state of the head mounted display 100, and store the extracted frame as a new keyframe. At this time, the registration information generation unit 274 classifies, on the basis of a predetermined criterion, the keyframe into any one of a plurality of groups for which different discard rules are set.

In addition, as necessary, the registration information generation unit 274 discards data indicating a stored keyframe and selected according to a discard rule set for each group. For example, when the data size of the keyframes reaches an upper limit, in which condition new keyframes are difficult to store, the registration information generation unit 274 sequentially discards the keyframes from the earliest registration in the group for which a discard rule of first-in first-out (FIFO) is set.

Furthermore, when a predetermined number of keyframes belonging to a group prohibiting discard can be stored, the registration information generation unit 274 may finalize the keyframes constituting this group, and classify all later keyframes into a group allowing discard. In any case, a difference is set for each of the discard rules of the keyframes so as to prevent capacity insufficiency of the registration information storage unit 258 while reliably obtaining keyframes necessary for acquiring state information.

The play area control unit 264 defines a real space region where the user is safely movable as a play area, and subsequently issues warning on appropriate occasions such as a case when the user approaches a boundary of this play area in a stage of execution of an application. In any of these stages, the play area control unit 264 sequentially acquires the state information regarding the head mounted display 100 from the image analysis unit 272, and performs processing on the basis of the acquired state information.

For example, at the time of setting of the play area, the play area control unit 264 instructs the user wearing the head mounted display 100 to look around. As a result, images of real objects present around the user, such as furniture, a wall, and a floor, are captured by the stereo camera 110. The image analysis unit 272 sequentially acquires frames of these captured images, and generates registration information on the basis of the acquired frames. The play area control unit 264 automatically determines a range of a floor surface not colliding with the furniture, the wall, and the like as a play area with reference to map data included in this registration information.

The play area control unit 264 may cause the head mounted display 100 to display an image indicating a boundary of the temporarily determined play area to receive a play area editing operation from the user. In this case, the play area control unit 264 acquires contents of the user operation via the controller 140, and changes the shape of the play area according to the user operation. The play area control unit 264 finally stores data regarding the determined play area in the play area storage unit 256.

Note that the registration information generation unit 274 of the image analysis unit 272 may designate keyframes stored during setting of the play area, or keyframes selected from these keyframes on the basis of a predetermined criterion as keyframes prohibiting discard. As described above, images are intentionally captured so as to cover the entire surroundings of the user at the time of setting of the play area. In this manner, keyframes indicating states in a balanced manner can be easily obtained.

The App execution unit 290 reads data of an application selected by the user, such as a VR game, from the App storage unit 254, and executes the read application. At this time, the App execution unit 290 sequentially acquires state information regarding the head mounted display 100 from the image analysis unit 272, and then sets a view screen in a position and a posture corresponding to the state information and draws a display image. In this manner, a world of a display target can be expressed in a visual field corresponding to movement of the head of the user.

The display control unit 292 sequentially transmits data indicating frames of various images formed by the App execution unit 290, such as VR images and AR images, to the head mounted display 100. The display control unit 292 further transmits an image instructing the user to look around, an image indicating a state of the play area temporarily determined and receiving editing, an image warning for an approach to the boundary of the play area, and other images to the head mounted display 100, as necessary, at the time of play area setting.

FIG. 8 depicts an example of an image of a frame captured by the stereo camera 110, and a data example of a keyframe obtained from this image. Note that a pair of images are actually obtained as images captured by the stereo camera 110 for each frame. However, only one of these images is schematically depicted in the figure. The state information acquisition unit 276 extracts a plurality of feature points contained in a frame image 40 by using a publicly known method such as a corner detection method and a method based on a luminance gradient. As described above, these feature points are collated with feature points of a frame image at a previous time point to obtain corresponding points. In this manner, state information regarding the stereo camera 110 and obtained when the frame image 40 is captured is specified.

Meanwhile, in a case where a predetermined number or more, such as 24 or more, feature points are extracted from the one frame image 40, the registration information generation unit 274 designates the corresponding frame image 40 as a keyframe. The registration information generation unit 274 designates this frame as a keyframe because corresponding points are easily detectable from a frame containing a large number of feature points by collation with other frames. However, a keyframe selection criterion is not limited to the number of feature points. For example, a keyframe may be a frame image containing a difference by a threshold or larger in the state of the stereo camera 110 at the time of imaging, or may be selected on the basis of a combination of a plurality of criteria.

The registration information generation unit 274 generates data of a keyframe 42 including positional coordinates of feature points (e.g., feature points 44) extracted from the selected frame image 40 on an image plane, and an image in a predetermined range around the positional coordinates. The registration information generation unit 274 further associates the data of the keyframe 42 with state information indicating a state of the stereo camera 110 obtained when the selected frame image 40 is captured to generate final keyframe data. However, it is not intended that elements constituting the keyframe data be limited to these elements.

FIG. 9 depicts an example of a data structure of registration information stored in the registration information storage unit 258. The registration information has such a structure where a plurality of pieces of keyframe data 72a, 72b, 72c, 72d, and others are associated with one map data 70. In the figure, the map data 70 is represented as "MAP1," while the keyframe data 72a, 72b, 72c, 72d, and others are represented as "KF1," "KF2," "KF3," "KF4," and others, respectively. Each of these data has a structure presented below by way of example.

The map data 70 includes a "map ID" as identification information uniquely given to a corresponding map, and a series of "point information" constituting this map. Each of the point information is data including a "point ID" as identification information uniquely given to a corresponding point, and positional coordinates of this point in a three-dimensional space (represented as "3D positional coordinates" in the figure) in association with each other.

In addition, each of the keyframe data 72a, 72b, 72c, 72d, and others includes a "keyframe ID" as identification information uniquely given to a corresponding keyframe, "camera state information" as a position and a posture of the stereo camera 110 when the corresponding keyframe data is acquired, "acquisition time point" of the corresponding data, and a series of "feature point information" constituting the corresponding keyframe. The camera state information herein may be expressed as a relative state obtained by Visual SLAM on the basis of an initial state, for example, or may adopt an absolute value calculated by integrating a measurement value obtained by the motion sensor 134 built in the head mounted display 100, and a result obtained by Visual SLAM.

Each of the feature point information corresponds to the data indicated by the keyframe 42 in FIG. 8, and is provided as data which associates positional coordinates of an extracted feature point in an image plane (represented as "2D positional coordinates" in the figure) with an image having a predetermined size and located around the positional coordinates. Each of the feature points is further associated with the "point ID" which is identification information for identifying a point indicated by the corresponding feature point in a three-dimensional space.

Note that the data structure of the registration information is not limited to the structure depicted in the figure, but may contain auxiliary information available for efficiently extracting corresponding points at the time of collation with a current frame, or for enhancing accuracy of the map, as necessary. Moreover, the registration information storage unit 258 may store registration information regarding a plurality of pieces of the map data 70 and having a similar structure. For example, in a case where a plurality of places are designated as a game place at which the user plays, the play area control unit 264 sets a play area for each of these places, and the registration information generation unit 274 individually acquires and stores registration information regarding each of the places.

In this case, the registration information is further associated with identification information for identifying the corresponding place. The image analysis unit 272 acquires information indicating the place and input at the time of a start of game play by the user or other occasions, reads registration information corresponding to the acquired information, and uses the registration information for acquiring state information regarding the head mounted display 100. The registration information generation unit 274 may further generate registration information for each state when the position of the furniture is changed or in a case where an illumination environment is variable for each time zone, even at the same place.

In any case, the registration information generation unit 274 stores the keyframe data 72a, 72b, 72c, 72d, and others in a classified state on the basis of a predetermined criterion, such as "group A," "group B," and others, for each registration information. The registration information generation unit 274 retains keyframe discard rules set for each of the groups in an internal memory. For example, two groups constituted by one group prohibiting discard and the other group allowing discard by FIFO may be provided.

In this case, the registration information generation unit 274 initially classifies all keyframes obtained in each of a plurality of states covering all possible facing directions of the user into the former group, and keyframes obtained later in the same state into the latter group. Alternatively, keyframes evaluated in "quality" and classified into a plurality of stages may be designated as groups. For example, "quality" is classified into three stages, and keyframes belonging to a lowest quality group are preferentially discarded. A highest quality group is designated as a group prohibiting discard, while a middle quality group is designated as a group to be discarded when a specific condition is met.

Groups to which existing keyframes belong may be changed as necessary, on the basis of a "quality" comparison between a newly obtained keyframe and the existing keyframes. The high "quality" keyframe herein refers to a keyframe captured in a state including a difference by a predetermined value or larger, a keyframe containing a large number of feature points, a keyframe acquired at a recent time point, a keyframe collated a large number of times, or other keyframes. Any one of these keyframes may be designated as an index for classification, or any two or more of these keyframes may be combined and designated as a basis for classification.

For example, the keyframes may be scored from these viewpoints, and classified according to a range of a total score. In this manner, data of the keyframes is discarded substantially from the lowest quality. In addition, in a case where the number of times of use for collation is adopted as an index for classification, the registration information generation unit 274 further records the number of times of collation in the structure of the keyframe data depicted in the figure. Note that various patterns are adoptable concerning the number of groups classifying the keyframes, the criterion for classification, and the discard rules given to the groups. These factors may be optimized according to characteristics of applications, system scales, and the like.

FIG. 10 depicts examples of space division for evaluating space covering by keyframes. The space covering by keyframes herein refers to a width of a range covered by distribution of states of the head mounted display 100 produced when the respective keyframes are captured with respect to all possible states of the head mounted display 100.

The figure depicts classification examples in three patterns. Each of the examples is an example of equal divisions by yaw directions with respect to an axis aligned with a gravity direction, with the center located at the position of the user in a reference state such as a state at the time of a start of play area setting. A pattern 50 has division areas formed by division into four parts with a center angle of 90 degrees for each. A pattern 52 has division areas phase-shifted by 45 degrees from the pattern 50 with reference to a facing direction of the user. A pattern 54 has division areas formed by division into 16 parts with a center angle of 22.5 degrees for each.

The registration information generation unit 274 designates at least any one of the division areas in the patterns 50, 52, and 54 as a bin, and evaluates a range covered by a frame meeting a condition of a keyframe. Specifically, the registration information generation unit 274 specifies to which division area the direction of the stereo camera 110 at the time when the keyframe is captured belongs. On the basis of this specification, the registration information generation unit 274 determines that the corresponding division area is covered by the keyframe. Thereafter, the registration information generation unit 274 counts the total number of the division areas covered by the keyframes.

For example, in a case where all of the three division patterns depicted in the figure are used, a threshold "10" is set for the total number of the division areas covered by the keyframes. In a case where only the pattern 54 is used, a threshold "8" is used, for example. These values are determined as values reached when the user wearing the head mounted display 100 looks around himself or herself through 180 degrees, but not reached in a case where the user does not look around.

Note that various division patterns and thresholds to be used may be set according to widths in possible facing directions of the user or the like during execution of applications. For example, the center angles are not required to be equally divided. When the number of the division areas covered by the keyframes reaches the threshold, the registration information generation unit 274 determines that the entire space has been covered by the keyframes. Subsequently, for example, the registration information generation unit 274 classifies the keyframe having initially covered the division area into a group prohibiting discard. Simultaneously with this classification, the play area control unit 264 may finally determine the shape of the play area by using a map already constructed at that time.

Selection of keyframes prohibiting discard on the basis of the foregoing evaluation produces a widest variety of states of keyframes. Accordingly, a wide range can be covered by only a small number of keyframes. The registration information generation unit 274 classifies keyframes obtained later into a group allowing discard. Alternatively, if newly obtained keyframes for the same division area have higher quality, the existing keyframes prohibiting discard are replaced with the newly obtained keyframes.

Note that division of the division patterns is not limited to division by yaw directions, but may be division by pitch directions defining elevation angles, division by translation directions such as front-rear and left-right directions of the user, or division by a plurality of directions as combinations of these directions. However, when covering is evaluated on the basis of division by yaw directions, where a widest variety of information regarding feature points can be obtained, absence of frames collatable with a current frame is more easily avoidable even in a situation where the number of keyframes prohibiting discard is small.

Operation of the image display system configured as above will be subsequently described. FIG. 11 is a flowchart illustrating processing procedures performed by the image forming device 200 to set a play area. The user is allowed to select initial setting or resetting of a play area from a setting menu of the system of the head mounted display 100. In a case where initial setting or resetting of a play area is selected, the captured image acquisition unit 262 of the image forming device 200 establishes communication with the head mounted display 100, and starts data acquisition of frames captured by the stereo camera 110 (step S10).

Subsequently, the play area control unit 264 causes the head mounted display 100 to display a message for prompting the user to change the state of the stereo camera 110 via the display control unit 292 (step S12). In an actual situation, the play area control unit 264 may cause the head mounted display 100 to display an image for instructing the user to look around the surroundings with the head mounted display 100 kept attached.

Thereafter, the image analysis unit 272 carries out Visual SLAM by using frame images captured in the manner described above to generate registration information regarding a space where the user is present (step S14). Specifically, the image analysis unit 272 acquires a correspondence of feature points extracted from each of frame images, and specifies three-dimensional positional coordinates of points indicated by these feature points. Moreover, the image analysis unit 272 acquires a state change of the stereo camera 110 by using information indicating these positional coordinates, and then re-projects the points on the basis of the acquired state change to correct errors of the positional coordinates. In these processes, the image analysis unit 272 selects keyframes from the frame images on the basis of a predetermined condition.

Concurrently with this selection, the play area control unit 264 constructs a play area in a surrounding space of the user (step S16). For example, the play area control unit 264 estimates a three-dimensional shape of the room of the user by using map data contained in the registration information. At this time, the play area control unit 264 may detect a plane (typically, a floor surface) vertical to a gravity direction indicated by the motion sensor 134 on the basis of the estimated three-dimensional shape of the room to detect a play area corresponding to a synthesis result of a plurality of detected planes having the same height.

The processes in steps S14 and S16 are repeated until the image analysis unit 272 determines that sufficient keyframes for covering the surrounding space have been obtained on the basis of an evaluation of a coverage rate of the keyframes for division of the spaces as depicted in FIG. 10 by way of example (N in step S18 and steps S14 and S16). In this manner, a range to be defined as a boundary of the play area can be set without omissions, and sufficient map data and keyframe data can be prepared for the play area.

When it is determined that the surrounding space has been covered by the keyframes (Y in step S18), the play area control unit 264 stores play area data, which contains coordinate values of point clouds constituting the boundary of the play area, in the play area storage unit 256 (step S20). Note that the play area control unit 264 may give the user an opportunity for editing the play area as described above, and then store data after editing in the play area storage unit 256.

Moreover, the image analysis unit 272 associates map data with a plurality of pieces of keyframe data as depicted in FIG. 9, and stores these pieces of data in the registration information storage unit 258 (step S22). At this time, the image analysis unit 272 classifies a keyframe having initially filled the respective division area depicted in FIG. 10 into a group prohibiting discard, and classifies the other keyframes into a group allowing discard, for example, and then stores the classified keyframes. Note that various modes associated with classification are adoptable as described above.

FIG. 12 is a bird's eye view illustrating an example of a state change of the head mounted display 100 in a period of the processes from steps S14 to S18 in FIG. 11. In this example, each position and direction of the head mounted display 100 is represented in a form of an isosceles triangle (e.g., isosceles triangle 32). The base of the isosceles triangle corresponds to an imaging surface of the stereo camera 110. Accordingly, the head mounted display 100 and a visual line of the user extend in a direction indicated by each of arrows 34, for example.

The user moves in a room 30 while wearing the head mounted display 100 on the head and looking around according to the instruction presented in step S12. As a result, the state of the head mounted display changes as depicted in the figure. At this time, the play area control unit 264 may cause the head mounted display 100 to display a moving image corresponding to a visual line direction and captured by the stereo camera 110 without change. The user is allowed to safely move according to video see-through which presents a state of the real space in the facing direction of the user without change.

The image analysis unit 272 of the image forming device 200 generates registration information on the basis of frames of the moving image. The play area control unit 264 sets a play area 36 on the basis of the registration information. Note that the image analysis unit 272 may cause the head mounted display 100 to transmit measurement values of the head mounted display 100 obtained by the motion sensor 134, such as angular velocity and acceleration, together with frame data of the moving image. By utilizing these measurement values, the image analysis unit 272 can more accurately specify the state information regarding the stereo camera 110 at each point of time.

FIG. 13 is a flowchart illustrating processing procedures performed by the image forming device 200 to execute an application. For example, this flowchart starts when the user activates an application by using the image forming device 200. It is assumed that at least the play area setting process illustrated in FIG. 11 has been completed before the start of this application. Initially, the play area control unit 264 reads data regarding a play area and stored in the play area storage unit 256, such as data indicating a shape and a size of the play area (step S32).

Moreover, the image analysis unit 272 reads registration information stored in the registration information storage unit 258 (step S34). The registration information contains settings of the play area defined before this step, and keyframe data already acquired by execution of the application.

Subsequently, the App execution unit 290 reads program data of the application from the App storage unit 254, and starts processing (step S36). For example, the App execution unit 290 starts a VR game configured to progress according to movement of the user or contents of user operation input via the controller 140. In response to the start of the VR game, the image analysis unit 272 executes Visual SLAM by using frames of images captured by the stereo camera 110 and sequentially transmitted from the head mounted display 100 to acquire state information regarding the head mounted display 100 (step S38).

At this time, the image analysis unit 272 uses, as a frame to be collated with a current frame, the keyframe read in step S34 at a determined timing such as a timing in a predetermined cycle. In this manner, the state of the head mounted display 100 can be accurately acquired even in an initial stage in which sufficient frame data is not yet obtained. Particularly, the position of the user with respect to the play area can accurately be acquired by designating the keyframe acquired at the time of setting of the play area as a reference.

Moreover, when a newly obtained frame meets a requirement set for keyframes, the image analysis unit 272 generates keyframe data for this frame, and stores the generated keyframe data in an internal memory or the like. If a total size of all the keyframe data meets a condition for data discard in this stage, such as a case of an excess of a corresponding storage area capacity of the registration information storage unit 258, the image analysis unit 272 selects a keyframe from a group allowing discard, and discards the selected keyframe.

For example, the image analysis unit 272 determines a keyframe for discard in this group on the basis of a predetermined index, such as a keyframe acquired at an early time, a keyframe collated only a small number of times, and a keyframe obtained in a state far different from the current state of the stereo camera 110. Furthermore, the image analysis unit 272 determines classification of the new keyframe on the basis of a predetermined criterion. The group to which existing keyframes belong may be changed according to registration of the new keyframe.

Note that the image analysis unit 272 in the process in step S38 may integrate measurement values obtained by the motion sensor 134 built in the head mounted display 100 and results of Visual SLAM to derive the state of the head mounted display 100 as described above. The state information regarding the head mounted display 100 is sequentially supplied to the App execution unit 290. The App execution unit 290 generates frame data of a display image in a visual field corresponding to a viewpoint and a visual line of the user on the basis of the state information regarding the head mounted display 100, and sequentially transmits the generated frame data to the head mounted display 100 via the display control unit 292 (step S40) .

The head mounted display 100 sequentially displays the transmitted frame data. When the position of the user in the real world meets a condition for issuing warning, such as a case where the distance between the head mounted display 100 attached to the user and the boundary of the play area becomes a predetermined threshold (e.g., 30 centimeters) or shorter (Y in step S42), the play area control unit 264 of the image forming device 200 executes a predetermined warning process for the user (step S44).

For example, the play area control unit 264 supplies an image indicating the boundary of the play area as a three-dimensional object, such as a fence, to the display control unit 292. The display control unit 292 may superimpose the image indicating the boundary of the play area on an application image formed by the App execution unit 290 to display the superimposed image on the head mounted display 100 as a display image. Moreover, in a case where the position of the user in the real world has come close to the boundary of the play area, or has crossed the boundary of the play area, the play area control unit 264 may cause the head mounted display 100 to display a video see-through image via the display control unit 292.

When the position of the user in the real world does not meet the condition for issuing warning (N in step S42), the flow skips the process in step S44. Before a predetermined ending condition, such as a stop of execution of the application by the user, is met (N in step S46), the flow repeats the processes in steps S38 to S44. In a case where the predetermined ending condition has been met (Y in step S46), the image analysis unit 272 reflects keyframe data newly obtained in step S38 and entire contents of the registration information updated according to this keyframe data in the registration information storage unit 258 (step S48), and ends the entire process.

FIG. 14 depicts diagrams each depicting an example of transitions of keyframes according to the present embodiment. The figure depicts keyframes acquired and used during play area setting (a) and during execution of an application (b), and each indicated by an isosceles triangle representing a state of the head mounted display 100 at the time of acquisition in the corresponding period. Similarly to FIG. 12, each base of the isosceles triangles corresponds to the imaging surface of the stereo camera 110. Moreover, it is assumed in the example depicted in the figure that the keyframes are classified into two patterns of "discard prohibited" and "discard allowed." The former is indicated by a black isosceles triangle (e.g., isosceles triangle 80), while the latter is indicated by a white isosceles triangle (e.g., isosceles triangle 82).

The transition (a) is achieved along with setting of the play area in a situation before setting of the play area, or when resetting of the play area is necessary. In step S50 corresponding to an initial stage, the user looks around a surrounding space as indicated by an arrow according to an instruction from the play area control unit 264. As a result, the stereo camera 110 of the head mounted display 100 captures a moving image while moving a visual line substantially in a radial manner. The image analysis unit 272 generates registration information on the basis of frames of the moving image by using Visual SLAM.

At this time, the registration information generation unit 274 sequentially selects a frame meeting a requirement from frames from which feature points are extracted, and determines the selected frame as a keyframe. In the figure, all keyframes are designated as frames allowing discard in the stage of step S50 as the initial state. These keyframes are classified in step S52 in a subsequent stage. For example, the registration information generation unit 274 selects keyframes one by one, each of which is acquired in a state corresponding to respective division areas divided by yaw directions as depicted in FIG. 10, and classifies the selected keyframes into a group prohibiting discard and the other keyframes into a group allowing discard.

After completion of play area setting, the registration information generation unit 274 associates pieces of data of all the keyframes with map data together with classification information, regardless of the classification of the keyframes, and stores these pieces of data in the registration information storage unit 258. Note that pieces of data of approximately 100 keyframes in total are stored in an actual situation, and that approximately a half of these pieces of data is classified into the group prohibiting discard, for example. However, it is not intended that the embodiment be limited to this manner of classification.

The transition (b) is achieved along with processing of the application. In step S60 corresponding to an initial stage, the registration information generation unit 274 reads registration information stored in the registration information storage unit 258. In this manner, as surrounded by a broken line 84, a completed state of acquisition of keyframes covering all directions is achieved without a necessity of looking around the surroundings by the user. Moreover, a newly captured image is transmitted from the head mounted display 100 in response to the start of the application. Accordingly, a keyframe is added as appropriate.

The state information acquisition unit 276 collates the newly transmitted frame (e.g., frame 86) with a keyframe obtained in a state close to the state of the newly transmitted frame to acquire current state information regarding the head mounted display 100. Because various types of keyframes are prepared, the state information can be acquired efficiently and with stable accuracy, regardless of the state of the head mounted display 100, even in the initial stage in which only a small number of frames have been newly transmitted.

The registration information generation unit 274 basically determines a keyframe discard rule according to classification of keyframes previously defined, such as classification at the time of play area setting. The registration information generation unit 274 further classifies new keyframes acquired by the time of step S62 at which the initial state of the head mounted display 100 is acquired. At this time, the registration information generation unit 274 may increase the number of keyframes prohibiting discard. In addition, the registration information generation unit 274 may make a configuration change of the groups, such as a change of the keyframes originally included in the group prohibiting discard to the group allowing discard.

When the position or the posture of the user considerably changes according to progress in the game corresponding to the application, for example, the number of keyframes each in a state close to the changed position or posture increases as illustrated in step S64. When the number of the keyframes reaches an upper limit set in consideration of the capacity or the like of the registration information storage unit 258, the registration information generation unit 274 sequentially discards the keyframes previously determined as keyframes allowing discard. In this manner, keyframes highly likely to be collated can preferentially be stored even if the storage capacity of the registration information storage unit 258 is limited.

Moreover, the keyframes selected on the basis of a predetermined criterion are left as keyframe prohibiting discard. In this manner, highly accurate state tracking can be maintained without a need of time for collation or failure in collation even when the tendency of the movement of the user suddenly changes. After the application process ends, the registration information generation unit 274 associates pieces of data of all the keyframes with map data together with classification information, regardless of the classification of the keyframes, and stores these pieces of data in the registration information storage unit 258. In this manner, a transition similar to (b) is repeated in a next application process.

According to the present embodiment described above, the technology which acquires a position and a posture of a moving body and an environment map from a frame of a captured image by using Visual SLAM selects a keyframe as a reference, and collates a current frame with the keyframe to reduce errors in state information. In this case, the keyframes are classified into a plurality of groups having different discard rules on the basis of a predetermined criterion. In this manner, whether discard is allowed or not, a period until discard, storage priorities, and others can be controlled according to quality or characteristics of keyframes, compatibility with an actual state of the moving body, or the like.

As a result, highly necessary keyframes can be stored in freely readable conditions even with a limited storage capacity. Accordingly, accurate state information can be acquired from an initial stage for which only a short imaging period of time is provided. In a case where the technology of the present embodiment is applied to a head mounted display which displays images of a virtual world corresponding to movement of a user, such as a VR game, keyframes are acquired at the time of play area setting. In this manner, keyframes covering an entire space can be constantly provided according to an individual environment of each user. Accordingly, acquisition of state information, and also formation of display images and warning for dangers caused by movement on the basis of the state information can be achieved with high accuracy.

By generating and registering new keyframe data and appropriately discarding existing keyframes according to rules even during state tracking, an optimized state of keyframe configurations can be constantly maintained. This optimization of keyframes eliminates the necessity of preparing a large number of keyframes beforehand on an assumption of various circumstances, and therefore contributes to saving of time and labor required for the user at the time of initial setting, and also reduction of a necessary storage capacity.

Description of the present invention on the basis of the embodiment is now completed. This embodiment is presented only by way of example. It is therefore understood by those skilled in the art that various modifications can be made in combinations of the constituent elements and the processes included in the embodiment, and that these modifications are also included in the scope of the present invention.

[Industrial Applicability]

As described above, the present invention is applicable to an image forming device, a game machine, a portable terminal, a head mounted display, an image display system including at least any one of these, or the like.

[Reference Signs List]

    10: Image display system
    100: Head mounted display
    200: Image forming device
    222 CPU
    226: Main memory
    258: Registration information storage unit
    264: Play area control unit
    272: Image analysis unit
    274: Registration information generation unit
    276: State information acquisition unit
    292: Display control unit

**Claims**

1.  An information processing device comprising:

    a state information acquisition unit that extracts a feature point from each of latest frames of a moving image currently captured, and acquires state information regarding a position and a posture of a device equipped with a camera capturing the moving image, on a basis of a relation between a corresponding feature point of a previous frame to be collated and a point on a subject represented by these feature points;
    a registration information generation unit that determines frames included in the latest frames and meeting a predetermined condition as keyframes used as a reference for the previous frame, classifies each of the keyframes into any one of a plurality of groups for which different discard rules are set, registers the classified keyframes, and then discards, on a basis of the discard rules, any of pieces of data of keyframes previously registered; and
    a registration information storage unit that stores data of each of the keyframes together with information indicating the classification.

2.  The information processing device according to claim 1, wherein the registration information generation unit classifies some of the keyframes into a group prohibiting discard.

3.  The information processing device according to claim 2, wherein the registration information generation unit selects the keyframe classified into the group prohibiting discard, on a basis of distribution of states of the device produced when the respective keyframes are captured.

4.  The information processing device according to claim 3, wherein the registration information generation unit selects one of the keyframes captured in respective directions in division areas defined by dividing a space by yaw directions around the device with an axis aligned with a gravity direction, and classifies the selected one keyframe into the group prohibiting discard.

5.  The information processing device according to any one of claims 1 to 4, wherein the registration information generation unit classifies the keyframes on a basis of at least any one of the number of extracted feature points, an acquisition time point, the number of times of use for collation, and a difference between a state of the device at a time of imaging and other states.

6.  The information processing device according to any one of claims 1 to 5, wherein the registration information generation unit discards the keyframe registered first in the keyframes previously registered and belonging to one of the groups at the time of an excess of a registration upper limit of the keyframes due to registration of the new keyframe.

7.  The information processing device according to any one of claims 1 to 6, wherein the state information acquisition unit acquires the state information on a basis of the moving image that indicates a space around a user wearing a head mounted display as the device and that is captured by movement of the user.

8.  The information processing device according to claim 7, further comprising:
    a play area control unit that sets a play area where the user is movable, on a basis of an environment map having a three-dimensional structure, including a set of the points, and constructed together with the state information, wherein the registration information generation unit selects the keyframe classified into a group prohibiting discard from frames of the moving image captured at a time of setting of the play area.

9. The information processing device according to claim 7 or 8, further comprising:

an application execution unit that forms a display image in a visual field corresponding to a visual line of the user on a basis of state information regarding the head mounted display, wherein the state information acquisition unit acquires the state information regarding the head mounted display by using data of the keyframes stored in the registration information storage unit before the application execution unit starts processing.

10. An information processing method comprising:

a step of extracting a feature point from each of latest frames of a moving image currently captured, and acquiring state information regarding a position and a posture of a device equipped with a camera capturing the moving image, on a basis of a relation between a corresponding feature point of a previous frame to be collated and a point on a subject represented by these respective feature points;
a step of determining frames included in the latest frames and meeting a predetermined condition as keyframes used as a reference for the previous frame, classifying each of the keyframes into any one of a plurality of groups for which different discard rules are set, and registering the classified keyframes;
a step of discarding, on a basis of the discard rules, any of pieces of data of keyframes previously registered; and
a step of storing data of each of the keyframes in a storage device together with information indicating the classification.

11. A computer program causing a computer to achieve:

a function of extracting a feature point from each of latest frames of a moving image currently captured, and acquiring state information regarding a position and a posture of a device equipped with a camera capturing the moving image, on a basis of a relation between a corresponding feature point of a previous frame to be collated and a point on a subject represented by these respective feature points;

a function of determining frames included in the latest frames and meeting a predetermined condition as keyframes used as a reference for the previous frame, classifying each of the keyframes into any one of a plurality of groups for which different discard rules are set, and registering the classified keyframes;
a function of discarding, on a basis of the discard rules, any of pieces of data of keyframes previously registered; and
a function of storing data of each of the keyframes in a storage device together with information indicating the classification.

# FIG.1

FIG.2

EP 4 475 548 A1

200

100

140

CONTROLLER

10

# F I G . 3

# F I G . 4

# FIG.5

```
    222              224              226
    CPU              GPU             MAIN
                                    MEMORY
                                                      230
─────┬───────────────┬───────────────┬─────────────────────────────

                          INPUT/OUTPUT INTERFACE                    228

  ─────┬──────────┬──────────┬──────────┬──────────
  COMMUNICATION  STORAGE   OUTPUT    INPUT    RECORDING MEDIUM
     UNIT         UNIT      UNIT      UNIT     DRIVE UNIT

     232          234       236       238        240
```

200

# FIG.6

```
    120              122              124              126
    CPU             MAIN           DISPLAY          AUDIO
                   MEMORY            UNIT        OUTPUT UNIT
                                                                128
─────┬───────────────┬───────────────┬───────────────┬──────────

                          INPUT/OUTPUT INTERFACE                130

       ─────┬────────────────┬────────────────┬────────
     COMMUNICATION          MOTION           STEREO
        UNIT                SENSOR           CAMERA

        132                  134              110
```

100

# F I G . 7

IMAGE FORMING DEVICE — 200

250 — DATA PROCESSING UNIT

260 — SYSTEM UNIT

IMAGE ANALYSIS UNIT — 272

262 — CAPTURED IMAGE ACQUISITION UNIT

REGISTRATION INFORMATION GENERATION UNIT — 274

264 — PLAY AREA CONTROL UNIT

STATE INFORMATION ACQUISITION UNIT — 276

290 — APP EXECUTION UNIT

DISPLAY CONTROL UNIT — 292

252 — DATA STORAGE UNIT

APP STORAGE UNIT

PLAY AREA STORAGE UNIT

REGISTRATION INFORMATION STORAGE UNIT

252        256        258

FIG.8

EP 4 475 548 A1

# FIG.9

**258** — MAP INFORMATION STORAGE UNIT

GROUP A

GROUP B

70 — MAP1

72a — KF1    72b — KF2 ...

72c — KF3    72d — KF4 ...    ...

.....

**POINT INFORMATION**

| MAP ID | |
|---|---|
| POINT ID | 3D POSITIONAL COORDINATES |
| POINT ID | 3D POSITIONAL COORDINATES |
| POINT ID | 3D POSITIONAL COORDINATES |

⋮  ⋮

| KEYFRAME ID | | |
|---|---|---|
| CAMERA STATE INFORMATION | | |
| ACQUISITION TIME | | |
| 2D POSITIONAL COORDINATES | SURROUNDING IMAGE | POINT ID |
| 2D POSITIONAL COORDINATES | SURROUNDING IMAGE | POINT ID |
| 2D POSITIONAL COORDINATES | SURROUNDING IMAGE | POINT ID |

⋮  ⋮  ⋮

**FEATURE POINT INFORMATION**

# FIG.10

50

52

54

# FIG.11

START

START FRAME DATA ACQUISITION — S10

INSTRUCT USER TO CHANGE STATE — S12

GENERATE MAP INFORMATION — S14

CONSTRUCT PLAY AREA — S16

SURROUNDING SPACE COVERED? — S18

N

Y

STORE PLAY AREA — S20

STORE MAP INFORMATION — S22

END

# FIG.12

# FIG.13

```
START
```

| READ PLAY AREA | S32 |

| READ KEYFRAME | S34 |

| START APPLICATION PROCESS | S36 |

| ACQUIRE STATE INFORMATION | S38 |

| FORM AND TRANSMIT IMAGE IN CORRESPONDING VISUAL FIELD | S40 |

WARNING CONDITION MET? — S42 — N

Y

| WARNING PROCESS | S44 |

ENDING CONDITION MET? — S46

N

Y

| UPDATE MAP INFORMATION | S48 |

```
END
```

# FIG.14

## INTERNATIONAL SEARCH REPORT

| International application No. |
| --- |
| **PCT/JP2022/047632** |

**A.   CLASSIFICATION OF SUBJECT MATTER**

*H04N 23/60*(2023.01)i; *G06F 3/01*(2006.01)i; *G06T 7/70*(2017.01)i; *G09G 5/00*(2006.01)i
FI:   H04N23/60 500; G06F3/01 510; G06T7/70 Z; G09G5/00 550C; H04N23/60 300

According to International Patent Classification (IPC) or to both national classification and IPC

**B.   FIELDS SEARCHED**

Minimum documentation searched (classification system followed by classification symbols)

H04N23/60; G06F3/01; G06T7/70; G09G5/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
| --- | --- | --- |
| Y | WO 2019/123548 A1 (SONY INTERACTIVE ENTERTAINMENT INC.) 27 June 2019 (2019-06-27) paragraphs [0011]-[0016], [0029], [0037]-[0038], fig. 1-2 | 1-3, 5-7, 9-11 |
| A | paragraphs [0011]-[0016], [0029], [0037]-[0038], fig. 1-2 | 4, 8 |
| Y | JP 2021-184115 A (SONY GROUP CORP) 02 December 2021 (2021-12-02) paragraphs [0031], [0072], [0123]-[0128] | 1-3, 5-7, 9-11 |
| A | paragraphs [0031], [0072], [0123]-[0128] | 4, 8 |
| Y | JP 2020-144710 A (MITSUBISHI HEAVY IND LTD) 10 September 2020 (2020-09-10) paragraphs [0050], [0068]-[0073] | 1-3, 5-7, 9-11 |
| A | paragraphs [0050], [0068]-[0073] | 4, 8 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **09 February 2023** | **21 February 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2022/047632**

| Patent document cited in search report | | | Publication date (day/month/year) | Patent family member(s) | | | Publication date (day/month/year) |
|---|---|---|---|---|---|---|---|
| WO | 2019/123548 | A1 | 27 June 2019 | US | 2020/0402308 | A1 | |
| | | | | paragraphs [0036]-[0041], [0054], [0062]-[0063], fig. 1-2 | | | |
| | | | | EP | 3731191 | A1 | |
| | | | | paragraphs [0011]-[0016], [0029], [0037]-[0038], fig. 1-2 | | | |
| JP | 2021-184115 | A | 02 December 2021 | US | 2022/0122345 | A1 | |
| | | | | paragraphs [0053], [0094], [0145]-[0150] | | | |
| | | | | WO | 2020/045092 | A1 | |
| | | | | DE | 112019004282 | T | |
| JP | 2020-144710 | A | 10 September 2020 | US | 2020/0286257 | A1 | |
| | | | | paragraphs [0076]-[0077], [0112]-[0121] | | | |
| | | | | DE | 102020103252 | A1 | |
| | | | | CN | 111664857 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019149621 A